Europäisches Patentamt

**European Patent Office**

Office européen des brevets

(19)

(11) Publication number: **0 250 372**
**B1**

(12) # EUROPEAN PATENT SPECIFICATION

(45) Date of publication of the patent specification:
**12.12.90**

(51) Int. Cl.⁵: **F01C 1/07,** F01C 11/00,
F02B 53/08

(21) Application number: **87830200.9**

(22) Date of filing: **29.05.87**

(54) **Rotary piston engine.**

(30) Priority: **06.06.86 IT 2070186**

(43) Date of publication of application:
**23.12.87 Bulletin 87/52**

(45) Publication of the grant of the patent:
**12.12.90 Bulletin 90/50**

(84) Designated Contracting States:
**BE CH DE ES FR GB LI NL SE**

(56) References cited:
**FR-A- 1 275 423**
**GB-A- 1 155 429**
**US-A- 2 096 074**
**US-A- 3 092 031**

(73) Proprietor: **Pomar, Eliodoro, Apartado de Correos 366,
Torremolinos, Malaga(ES)**

(72) Inventor: **Pomar, Eliodoro, Apartado de Correos 366,
Torremolinos, Malaga(ES)**

(74) Representative: **Cicogna, Franco, Ufficio Internazionale
Brevetti Dott.Prof. Franco Cicogna Via Visconti di
Modrone, 14/A, I-20122 Milano(IT)**

ACTORUM AG

## Description

The present invention relates to a rotary piston combustion engine, with means for varying the compression ratio even during the operation, comprising a containing cylinder forming variable volume chambers, defined by the cylinder inner wall and piston side walls, the cross-section of which has substantially the shape of a circle sector.

During the operation, the pistons are rotated with an uneven circular motion, by means of a mechanism including a crank, having an eccentric axis with respect to that of the containing cylinder, and small coupling rods coupling the arms of the crank and the end portions of small shafts passing through the pistons.

The compression ratio is changed by means of a further mechanism able of changing the eccentricity value of the crank axis with respect to the cylinder axis.

Preferably each engine comprises two pluralities of chambers, each of which is provided with a rotating motion inside a respective cylinder.

The construction of the assembly affords the possibility of obtaining a perfect balancing, both static and dynamic, of the masses driven in each cylinder, the fitting of a same mechanism to very different operation conditions, and a very high specific power with respect to that which may be obtained from the presently commercially available engines.

## BACKGROUND OF THE INVENTION

The present invention relates to a rotary piston combustion engine, with means for varying the compression ration.

As is known, there are commercially presently available the so called Wankel type rotating engines which, however, are affected by great drawbacks with respect to the gas tightness and do not afford the possibility of affecting, by modifying the variable volume chamber shape, the combustion conditions of the mixture, depending on its turbulence and the formation of a proper flame front.

Moreover, the Wankel engines do not afford the possibility of achieving very high compression ratios and of fully exploiting the gas expansion force, because of the poor radial extension of the surface affected by the gas active pressure.

Furthermore, the Wankel engines have a rather complex structure, and have high servicing requirements.

The US-A 2 096 074 patent discloses a rotary piston engine comprising at least a cylinder forming variable volume chambers, defined by the side walls of pistons having, in cross-section, a substantially circle sector shape, said pistons being rotated with an uneven circular motion by means of a mechanism including a crank having an eccentric axis with respect to that of the cylinder and coupling means coupling the crank arms and pistons, means being moreover provided for varying the compression ratio operating on the variation of the eccentricity of the crank axis with respect to the cylinder axis.

The US-A 3 092 031 patent discloses a rotary piston mechanism in which the pistons are coupled to crank means by means of end portions of small shafts passing through the pistons.

## SUMMARY OF THE INVENTION

Accordingly, the task of the present invention is to overcome the above mentioned drawbacks, by providing a rotary piston combustion engine which may be perfectly balanced, both statically and dynamically, while preserving a very simple mechanical construction.

Within the above task, a main object of the present invention is to provide such a rotary piston engine which affords the possibility of obtaining a high specific power, both due to the possibility of obtaining a greater number of complete cycles for each rotation of the driving shaft, and due to the greater rotation speed which may be obtained owing to a complete elimination of the reciprocating masses.

Another object of the present invention is to provide such a rotary piston engine which, though of great constructional simplicity, is effective to give a very even driving torque.

Another object of the present invention is to provide such an engine which has a better compression efficiency than that of a conventional two stroke engine, owing to the greater filling coefficient, operative arrangement of the pre-compressor, a complete independence from the angular phases of the precompressor from the those of the engine; in fact in this engine it is possible, for example, to increase the burnt gases expansion stroke, without modifying the duration of the other strokes, as well as to wash the combustion chamber by not carburized air, before the introduction therein of the new fresh mixture feed.

A further object of the present invention is to provide such an engine which affords the possibility of changing the used fuel type, by instantaneously adapting the compression ratio to the characteristics of the selected fuel, thereby practically providing an effective multiple-fuel engine including, in addition, the possibility of using a type of fuel for example during the starting time and another fuel during the steady state operation.

Yet another object of the present invention is to provide such a rotary piston combustion engine which is very simple construction-wise and affords the possibility of completely omitting constructional complex members such as, for example, the crankshaft.

According to one aspect of the present invention, the above mentioned task and objects, as well as yet other objects which will become more apparent thereinafter, are achieved by a rotary piston combustion engine, with means for varying the compression ratio, having the features of the characterizing part of the claim.

In particular, the mentioned pistons are rotated, with an uneven circular motion, by a mechanism including a crank, having an eccentric axis with respect to that of the cylinder, and by rods coupling the crank arms and end portions of small shafts passing through the pistons, means being furthermore provided for varying the compression ratio and operating depending on the variation of the eccentricity of the crank axis with respect to the cylinder axis.

BRIEF DESCRIPTION OF THE DRAWINGS

Further characteristics and advantages of the invention will become more apparent thereinafter from the following description of a preferred, though not exclusive, embodiment of a rotary piston combustion engine with means for varying the compression ratio, which is illustrated, by way of an indicative example, in the accompanying drawings in which:

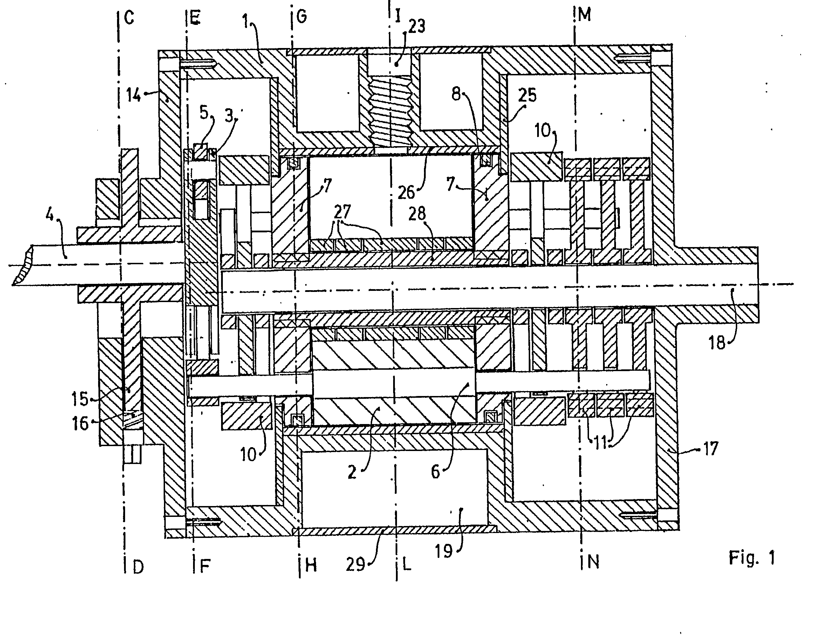

Fig. 1 is a longitudinal cross-section of the engine cylinder, taken along the line A-B of the following Figures;

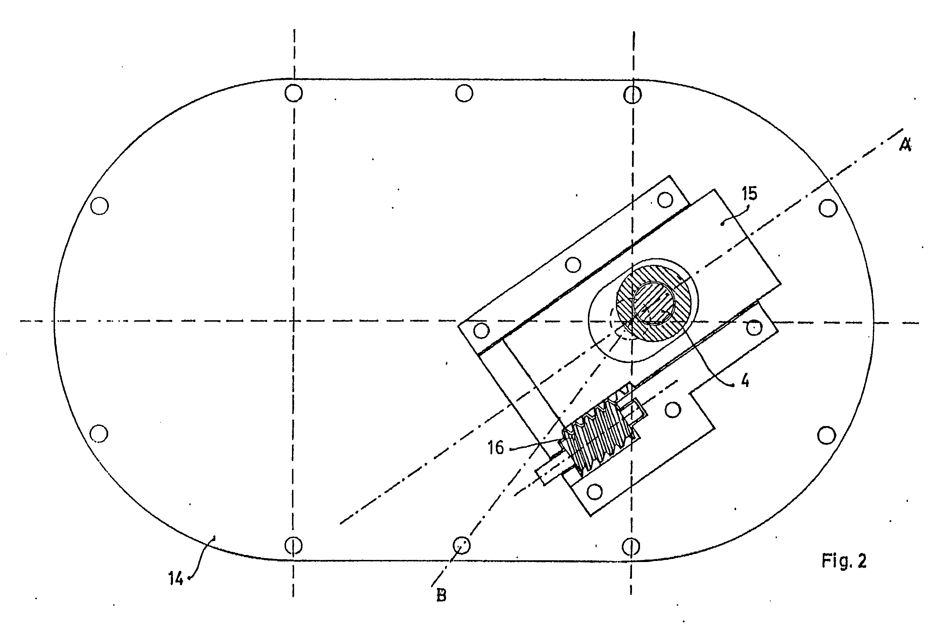

Fig. 2 is a cross-sectional view taken along the line C-D of Fig. 1 and illustrating, by way of an example, a mechanism effective to change, simultaneously and in the same way, the compression ratio of all of the chambers of the engine and those of the precompressor coupled thereto;

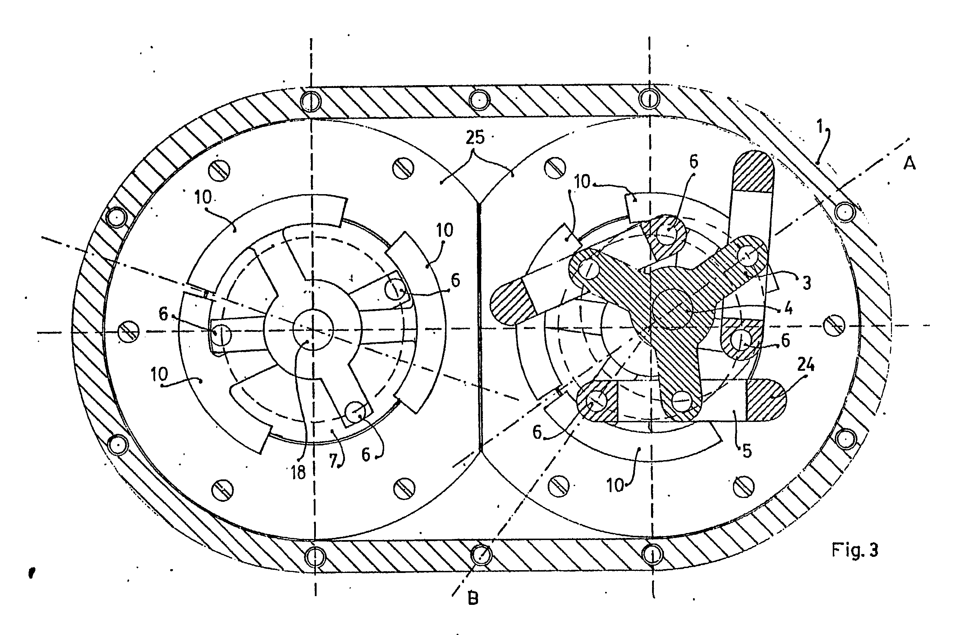

Fig. 3 is a cross-section view, taken along the line E-F of Fig. 1, at the crank and coupling rods forming the mechanism for cyclically changing the piston rotation or turning speed;

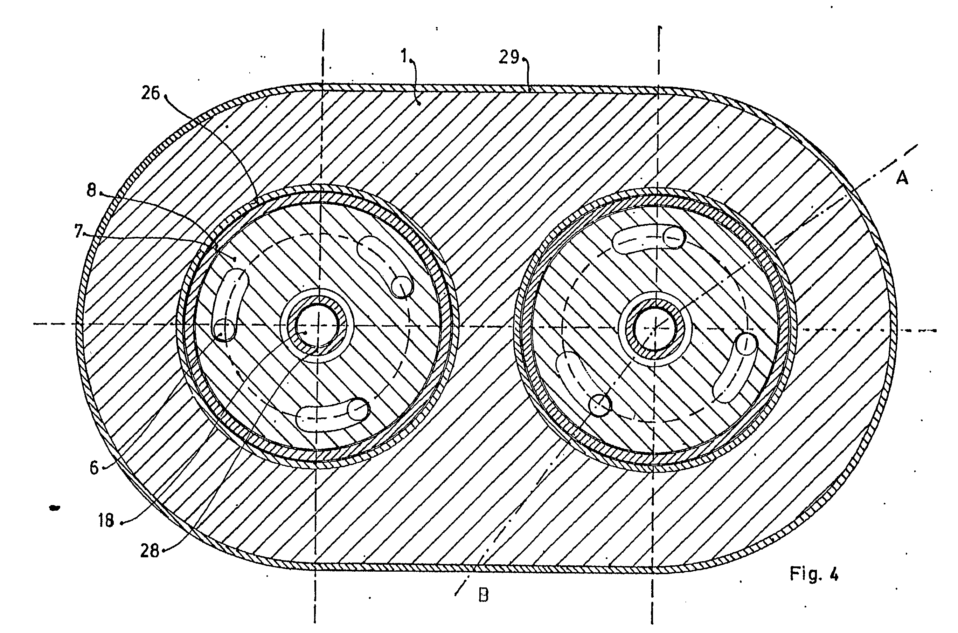

Fig. 4 is a cross-section view, taken along the line G-H of Fig. 1, and specifically illustrating the tightness front discs both of the engine cylinder and of the precompressor cylinder;

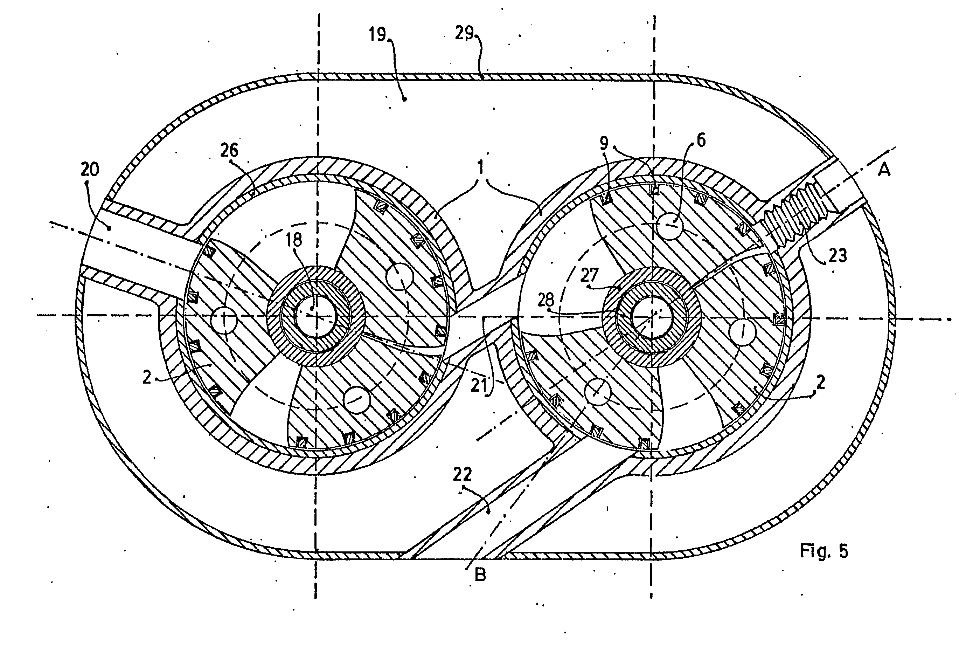

Fig. 5 is a cross-sectional view, taken along the line I-L of Fig. 1, and illustrating the cross-section and mutual position of the pistons of the engine and those of the precompressor;

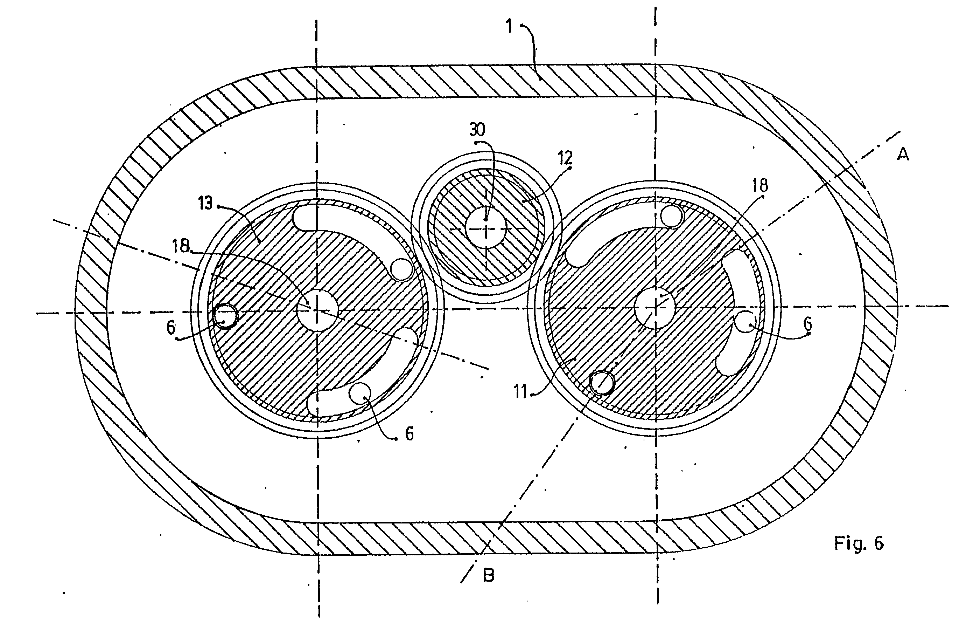

Fig. 6 is a cross-sectional view, taken along the line M-N of Fig. 1, at the gears for mechanically coupling the engine pistons to the precompressor pistons, in order to assure the proper mutual position thereof;

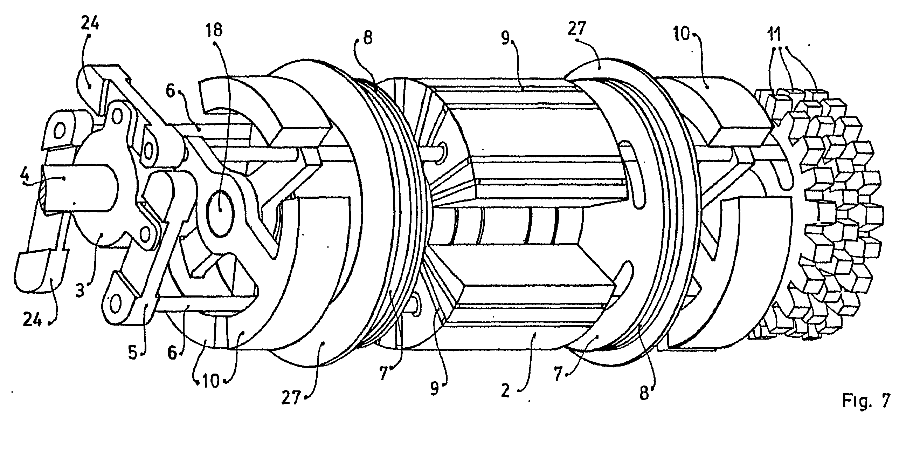

Fig. 7 is an axonometric view illustrating, in exploded form, the inner rotating portion of an engine cylinder;

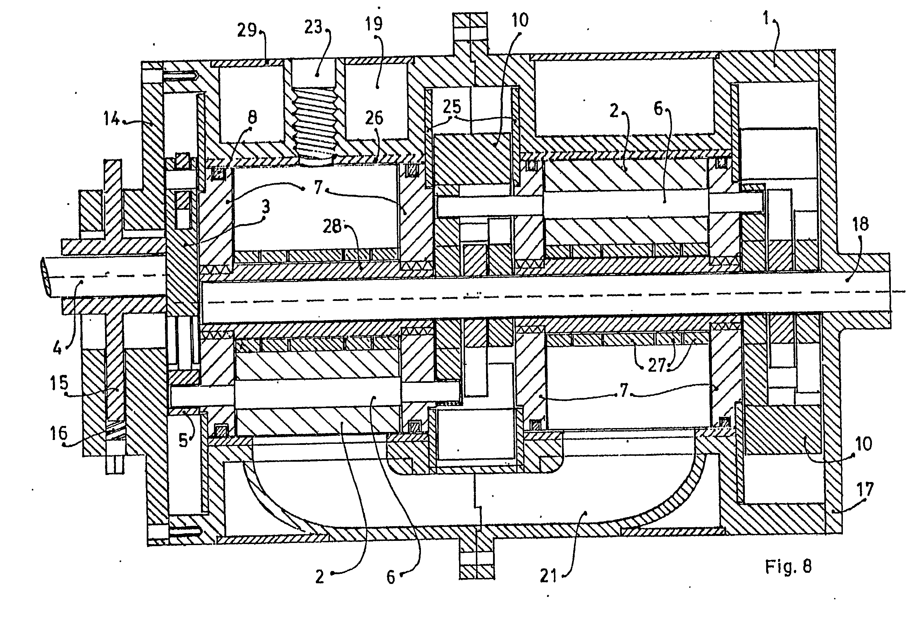

Fig. 8 is a longitudinal cross-section view illustrating the overal arrangement of the engine cylinder and precompressor cylinder, which are coaxially arranged.

DESCRIPTION OF THE PREFERRED EMBODIMENT

With reference to the above mentioned Figures, the rotary piston combustion engine according to the invention comprises at least a cylinder 1, provided with a liner 26 in which there are arranged the pistons 2 coaxially rotating therein.

Through the cylinder 1 there are defined the inlet port 20, transfer port 21 and outlet port 22 and, moreover, there is provided a housing for receiving the sparking plug 23 and/or the fuel injector member.

In the cylinder 1 there are arranged a plurality of pistons 2 including, for each cylinder, at least two units; in the accompanying drawings there are illustrated three pistons, each of which rotates about a central shaft and is coupled thereto through ring members 27.

With the driving shaft 4 there is rigid a crank 3, able of rotating about an axis which is eccentric with respect to the cylinder axis.

Small shafts 6 are rigid with the piston 2, and small coupling rods 5 are coupled to said small shaft 6, with the related counterweights 24.

The engine also comprises suitable tightness member, consisting of the discs 7 which are coupled to one another by the hollow shaft 28, circular band members 8 and prismatic band members 9 as well as ring members 25.

Each piston is coupled, through the tightness members, to the respective counterweight 10 which operates for statically and dynamically balancing the piston itself.

The pistons of the driving or engine cylinder and those of the precompressor cylinder are coupled to one another by means of suitable kinematic member which, for example, comprise driving gears 11, intermediate gears 12, rotating about the axis 30, and driven gears 13.

Furthermore, there is provided a mechanism for varying the compression ratio, which mechanism is supported by the front plug member 14, and can advantageously comprise a rack 15 - worm screw 16 assembly.

At the rear there is provided a plug member 17 rigid with the centering shaft 18. It should be pointed out that in the drawings there have been omitted the lubricating system ducts since they are not necessary for understanding the operation of the assembly: with respect to the cooling system there is exclusively represented the gap 19 included between the cylinder 1 and outer liner 29, in which a cooling fluid would be able of circulating.

In principle, the two cylinders, that is the driving one and the precompressing one, may be arranged on the same axis, one following the other, or they can arranged with a side by side relationship.

The rotary piston engine according to the invention operates with the following strokes: after the combustion step, in the chamber having the minimum volume configuration and with a suitable spark advance, with respect to achieving said configuration, the pistons 2 are caused to rotate. This rotation is transmitted by said pistons, through the small shafts 6, from one side to the coupling rods 5 and hence to the crank 3 and driving shaft 4 and, from the other side, to the members provided for transmitting motion to the precompressor pistons, for example through the gear train 11, 12 and 13.

This movement occurs about a centering shaft 18, which is coaxial with the containing cylinder.

Thus the shafts 6 are caused to move along different length circumference arcs, in like times, during a complete revolution of each piston; because of this reason, the pistons, as they rotate, will move to one another and away from one another alternatively, thereby causing the volume of the chambers defined by the radial walls of the pistons and inner wall of the encompasing cylinder to vary.

This volume variation depends on the eccentricity of the driving shaft with respect to the axis of the cylinder; accordingly, it will be sufficient to vary said eccentricity in order to change the compression ratio, theoretically from 0 to infinite.

In actual practice this ratio may be changed within sufficiently broad limits to afford the possibility of fitting the characteristics of the engine to all of the possible requirements of the operation of any combustion engine.

In the drawings there has been illustrated, by way of an example, one of the several possible mechanical approaches to vary the compression ratio, even as the engine is operating.

More specifically, the complete operating cycle or stroke number, for each revolution of the driving shaft, corresponds to the number of the chambers and hence to that of the related pistons: thus, in the exemplary embodiment shown in the drawings, the cycles or strokes will be three for each revolution.

Tightness of the engine parts, which are always slidingly contacted on extended surfaces, is assured by suitable labyrinths formed by resilient rings of any suitable types: those of prismatic shape are held in contact against the surface thereon they must slide, by means of springs, effective to cause said prismatic parts to abut on said surface even if the engine is in a stop condition, whereas, as the engine operates a portion of said parts will be pushed into a contact relationship because of the centrifugal force acting thereon.

From the above disclosure it should be apparent that the invention fully achieves the intended task and objects.

In particular it should be pointed out that the engine according to the invention is such as to operate in a precisely balanced way, in any conditions, with a consequent reduction of vibrations and increase of the engine efficiency.

Another important aspect of the invention, moreover, is that the engine affords the possibility of remarkably increasing the specific power, with an improved use of the gas expanding force, which is also due to the mainly radial extension of the surface subjected to the gas active pressure.

The main limitations to an increase of the specific power of this mechanism are the gas flow rate through the ports and the efficiency of the cooling system. In this connection it should be pointed out that the gas flow rate through the ports may be reduced, within given limits, by accurately designing the engine diameter-length ratio, and the cooling system efficiency may be improved by using, for the pistons and some inner mechanical parts, tough ceramics materials.

In practicing the invention, the used materials as well as the specific shapes and size may be any, according to requirements.

## Claims

A rotary piston engine comprising at least one cylinder (1); pistons (2) rotatably housed in each cylinder (1) and having the shape of a substantially circular sector in cross-section; variable volume working chambers defined by the inner wall of said cylinder (1) and the radially extending side walls of said pistons (2); a mechanism including a crank (3) having an eccentric axis with respect to that of the cylinder (1) to rotate said pistons (2) with an uneven circular motion; and means for varying the compression ratio, operating on the variation of the eccentricity of the crank axis with respect to the cylinder axis; characterized in that said rotary piston engine is a combustion engine; said mechanism to rotate the pistons (2) comprises coupling rods (5) coupling the crank arms of said crank (3) to end portions of small shafts (G) passing through said pistons (2); and said radially extending side walls of said pistons (2) have shaped surfaces adapted to reduce the inlet losses at the gas conveying ports leading to said working chambers and to improve the mixing and combustion of the operating mixture.

## Patentansprüche

Rotationskolbenmaschine einschliessend: wenigstens einen Zylinder (1); in jedem Zylinder (1) drehgelagerten Kolben, die als wesentlich kreisförmige Ausschnitte gebildet sind; Arbeitskammern verstellbare Volumen, die aus der inneren Wand des obengenannten Zylinders (1) und der radial sich erstreckenden Seitenwänden der obengenannten Kolben (2) bestimmt sind; ein Mechanismus, der, um so den obigen Kolben (2) eine ungleichmäßige Drehbewegung zu geben, mit einem eine zum Zylinder (1) exzentrische Achse aufweisenden Winkelsupport (3) versehen ist; und das Kompressionverhältnis verändernden Mittel, die für die Veränderung der Achsenexzentrizität des Winkelsupports zur Zylinderachse wirken; dadurch gekennzeichnet, daß die obengenannte Rotationskolbenmaschine ein Verbrennungsmotor ist; der obengenannte Mechanismus zum Drehen der Kolben (2) mit Stangen (5) versehen ist, die den Armen des obigen Winkelsupports (3) mit Endteilen von durch den obigen Kolben passenden Spindeln (6) in Verbindung stellen; und die obigen radial sich erstreckenden Seitenwände der obengenannten Kolben (2) mit verformten Flächen versehen sind, die den Eintrittsverlust an dem Gaseinströmeintritt zu verkleinern und die Mischung und die Verbrennung des Arbeitsgemisches zu verbessern ermöglichen.

## Revendications

Machine à piston rotatif comprenant au moins un cylindre; pistons (2) logés tournants dans chaque cylindre (1) et ayant la forme d'un secteur essentiellement circulaire en section transversale; chambres de travail ayant un volume variable définies par la paroi intérieure dudit cylindre (1) et les parois latérales s'étendant radialement desdits pistons (2); un mécanisme comprenant un support en forme d'équerre (3) ayant un axe excentrique par rapport de celui-là du cylindre (1), pour faire pivoter lesdits pistons (2) d'un mouvement de rotation pas uniforme; et moyens pour varier le rapport de compression, opérant sur la variation de l'excentricité de l'axe du support en forme d'équerre par rapport à l'axe du cylindre; caractérisé en ce que ladite machine à piston rotatif est un moteur à combustion; ledit mécanisme pour faire pivoter les pistons (2) comprend barres (5) joignant les bras dudit support en forme d'équerre (3), en passant à travers lesdits pistons (2), avec portions terminales de fuseaux (6); et lesdites parois latérales s'étendant radialement desdits pistons (2) présentent surfaces gabariées aptes à réduire les pertes d'entrée aux portes d'introduction gaz portant auxdites chambres d'opération et à améliorer le mélange et la combustion du mélange opératif.

Fig. 1

EP 0 250 372 B1

Fig. 2

EP 0 250 372 B1

Fig. 3

Fig. 4

EP 0 250 372 B1

Fig. 5

Fig. 6

Fig. 7

Fig. 8

EP 0 250 372 B1